# EUROPÄISCHE PATENTSCHRIFT

(11) **EP 3 718 862 B1**
(45) Veröffentlichungstag und Bekanntmachung des Hinweises auf die Patenterteilung: **15.06.2022**
(21) Anmeldenummer: 20020147.3
(22) Anmeldetag: 31.03.2020
(51) Int. Cl.: B62D 13/02

(54) **FAHRZEUG, INSBESONDERE SCHWERLAST-FAHRZEUG**
VEHICLE, IN PARTICULAR HEAVY-DUTY VEHICLE
VÉHICULE, EN PARTICULIER VÉHICULE À CHARGE LOURDE

(30) Priorität: 04.04.2019 DE 102019002455; 04.04.2019 DE 202019001532 U
(43) Veröffentlichungstag der Anmeldung: 07.10.2020
(73) Patentinhaber: Scheuerle Fahrzeugfabrik GmbH, 74629 Pfedelbach (DE)
(72) Erfinder: Düring, Alexander, 74629 Pfedelbach (DE)
(74) Vertreter: Leitner, Waldemar

(56) Entgegenhaltungen:
- CH-A5- 677 646
- DE-A1- 1 680 258
- DE-U1- 8 709 401
- DE-U1- 20 209 408

## Beschreibung

Die Erfindung betrifft ein Fahrzeug, insbesondere ein Schwerlast-Fahrzeug, welches ein Chassis mit mindestens einem lenkbaren Fahrgestell mit mindestens einer lenkbaren Radachse aufweist, wobei auf dem Chassis eine Drehanordnung zur Aufnahme eines zu transportierenden länglichen Objekts rotierbar angeordnet ist, durch deren Drehbewegung die mindestens eine lenkbare Achse des Fahrzeugs lenkbar ist.

Ein derartiges Fahrzeug ist - z. B. aus der DE 16 80 258 A1 - bekannt und wird insbesondere zum Transport von Lasten wie länglichen Objekten, wie z. B. Rotorblättern von Windkraftanlagen, Mastabschnitten derartiger Anlagen, um nur einige Beispiele zu nennen, eingesetzt. Derartige Fahrzeuge werden regelmäßig in einem aus einem Zugfahrzeug und einem nachlaufenden Fahrzeug gebildeten Fahrzeug-Verbund verwendet, wobei ein vorderes Ende dieses länglichen Objekts an dem Zugfahrzeug oder einem von diesem gezogenen Zwischenwagen angeordnet und ein hinterer Bereich oder das hintere Ende dieses Objekts auf einer Lastauflage des nachlaufenden Fahrzeugs aufliegt oder befestigt ist. Die Verbindung zwischen dem nachlaufenden Fahrzeug und dem diesem voranfahrenden Zugfahrzeug wird bei einer selbsttragenden Last ausschließlich durch diese Last, also das längliche Objekt, ausgebildet. Bei nicht-selbsttragenden Objekten wird oft eine Hilfskonstruktion eingesetzt, welche das nachlaufende Fahrzeug und das Zugfahrzeug mechanisch miteinander verbindet. Eine derartige Ausgestaltung eines Fahrzeug-Verbunds erlaubt es in effizienter Weise, längliche Objekte zu transportieren. Aufgrund der Länge des zu transportierenden Objekts ist aber das nachlaufende Fahrzeug weit vom Zugfahrzeug beabstandet, so dass, ausgenommen von der vorstehend beschriebenen Hilfskonstruktion, eine einen gekoppelten Fahrbetrieb erlaubende mechanische Verbindung zwischen dem Zugfahrzeug und dem nachlaufenden Fahrzeug nicht oder zumindest nicht ohne eine Einschränkung der Manövrierbarkeit realisierbar ist. Es ist daher bei derartigen Konstellationen in der Regel erforderlich, dass das nachlaufende Fahrzeug gelenkt ist, so dass es einer Änderung der Fahrtrichtung des Zugfahrzeugs folgen kann. Ändert das Zugfahrzeug seine Fahrtrichtung, so bewirkt dies, dass das von dem Fahrzeug-Verbund zu transportierende längliche Objekt aus der Längsrichtung des dem Zugfahrzeug nachlaufenden Fahrzeugs ausgelenkt wird, so dass also ein Winkel zwischen der Längsachse des nachlaufenden Fahrzeugs und der Längsachse des zu transportierenden Objekts gegeben ist. Diese Auslenkung des länglichen Objekts bewirkt auch eine Drehbewegung der um die Hochachse rotierbar auf dem Chassis befestigten, einen Drehschemel ausbildende Drehanordnung, welche die das längliche Objekt aufnehmende Lastauflage trägt. Dieser Drehwinkel der Drehanordnung wird abgenommen und auf die mindestens eine lenkbare Achse des Fahrzeugs übertragen, so dass das nachlaufende Fahrzeug eine Lenkbewegung ausführt.

Um diese Lenkbewegung beeinflussen zu können, insbesondere dämpfen zu können, um z. B. bei einem Überfahren eines Randsteins oder eines sonstigen Hindernisses eine plötzliche Lenkbewegung zu verhindern oder zumindest reduzieren zu können, ist beim bekannten Fahrzeug eine als Schemelbremse ausgebildete Bremseinrichtung vorgesehen, welche auf die Drehanordnung einwirkt. Durch die Beaufschlagung der Drehanordnung mit der von der Bremseinrichtung erzeugten Kraft wird eine Drehbewegung derselben erschwert, so dass die Auslenkung der Drehanordnung und damit korreliert die Auslenkung der Räder der lenkbaren Achse beeinflusst werden kann, insbesondere um die Laufeigenschaften dieser Räder positiv zu beeinflussen. Bei dem bekannten Fahrzeug ist hierzu vorgesehen, dass an einer Drehplatte der Drehanordnung ein Kurvensegment angeordnet ist, welches eine Bremsmulde besitzt, in welche ein Bremselement der Bremseinrichtung eingreift. Die Bremsmulde ist dabei derart angeordnet, dass bei einem Geradeaus-Lauf des Fahrzeugs das Bremselement in die Bremsmulde des Kurvensegments eintaucht. Wird die Drehplatte und somit das daran befestigte Kurvensegment bewegt, so bewegt sich das Bremselement aus der Bremsmulde heraus, wobei die von der Bremseinrichtung über das Bremselement auf die Drehanordnung ausgeübte Bremskraft überwunden werden muss, was zu einer Dämpfung der Auslenkung der Drehanordnung und somit zu einer die Bewegung der Drehanordnung bremsenden Wirkung führt.

Nachteilig bei dem bekannten Fahrzeug ist, dass die Bremseinrichtung nur eine einzige Neutralposition besitzt. Um nun eine entsprechende Bremswirkung erzielen zu können, ist es erforderlich, dass die Drehplatte der Drehanordnung und somit das Kurvensegment immer derart ausgerichtet sind, dass bei einer Geradeaus-Fahrt des Fahrzeugs sich die Bremsmulde des Kurvensegments in ihrer Neutral-Stellung befindet, so dass das Bremselement der Bremseinrichtung in die Bremsmulde eingreifen kann. Dies bedingt aber des Weiteren, dass die Drehanordnung und somit die über die Lastauflage auf der Drehanordnung angeordnete Last in der Längsrichtung des Fahrzeugs ausgerichtet sein muss. In einer jeden anderen Stellung der Drehanordnung und somit der Last zur Längsachse des Fahrzeugs kann bei der bekannten Bremseinrichtung das Bremselement nicht mehr in die Bremsmulde eingreifen, so dass eine Bremsfunktion nicht oder in nicht hinreichendem Maße gegeben ist.

Aus der CH 677 646 A5 ist ein zweiachsiger Anhänger eines Langholztransporters bekannt, der einen drehbaren Ladeschemel und eine lenkbare Achse aufweist. Der Anhänger ist mit einer hydraulischen Selbstlenkeinrichtung versehen, in der einerseits der Ladeschemel in Abstand von seiner Drehachse gelenkig mit mindestens einem Hydraulikzylinder an dem Chassis des Anhängers und andererseits die lenkbare Achse gelenkig mit mindestens einem hydraulischen Lenkzylinder ebenfalls an dem Chassis angelenkt sind. Jeweils zwei Zylinderkammern des Hydraulikzylinders und des Lenkzylinders sind mittels Hydraulikleitungen verbindbar. Eine derartige Konstruktion soll nach den Angaben in der vorgenannten Druckschriften den Vorteil haben, dass die Drehbewegung des Ladeschemels nunmehr nicht unmittelbar von dem Ladeschemel auf die gelenkte Achse übertragen wird. Somit sollen Stösse, die von dem Ladegut auf den Ladeschemel ausgeübt werden, nicht mehr direkt auf die Lenkung übertragen werden, sondern vielmehr über die auch als Stossdämpfer wirkenden Hydraulikzylinder abgedämpft werden. Das Lenkverhalten des bekannten Anhängers soll somit ruhiger werden, wobei die Vorteile des bekannten Selbstlenkanhängers erhalten bleiben sollen.

Aus der DE 202 09 408 U1 ist ein Langholz-Transporter mit einem lenkbaren, nachlaufenden Anhänger, der einen Drehschemel und eine Lenkachse aufweist, bekannt. Der nachlaufende Anhänger weist eine Lenkgabel auf, die im heruntergeklappten Zustand mittels eines Schlitzes über einen an der Spurstange der Lenkräder befestigten Zapfen eingreift. Hierdurch wird der Drehkranz verriegelt, was insbesondere dann angewendet wird, wenn der nachlaufende Anhänger auf einem Transport-Fahrzeug aufgesattelt wird, insbesondere beim Straßentransport ohne Langholzbeförderung. Das Aufsatteln erfolgt hierbei durch ein Heranziehen des nachlaufenden Anhängers an den Zugwagen. Zu diesem Zweck muss die über einen Drehschemel am Anhänger lenkbare gelagerte Lenkachse fixiert werden, was durch eine Klemmvorrichtung erfolgt. Diese weist einen Klemmnocken auf, der bevorzugt eine S-förmige Gestaltung aufweist und somit tangential an einem Drehkranz des Drehschemels anliegt. Der Klemmnocken ist auf einer Welle gelagert, die über einen Pneumatikzylinder oder durch eine ähnliche Betätigungsvorrichtung beaufschlagbar ist. Hierdurch ergibt sich an der Kontaktfläche zwischen Klemmnocken und Drehkranz eine sehr hohe, definierte Haltekraft, wobei die Betätigungsvorrichtung dabei auch mit der Bremsanlage gekoppelt sein kann, so dass sich eine Erhöhung der Spurtreue ergibt.

Es ist daher Aufgabe der vorliegenden Erfindung, ein Fahrzeug der eingangs genannten Art derart weiterzubilden, dass eine verbesserte Funktion einer die Lastauflage tragenden Drehanordnung des Fahrzeugs beaufschlagenden Bremseinrichtung gegeben ist.

Diese Aufgabe wird erfindungsgemäß durch ein Fahrzeug mit den Merkmalen des Anspruchs 1 gelöst.

Durch die erfindungsgemäßen Maßnahmen wird in vorteilhafter Art und Weise erreicht, dass die erfindungsgemäße Bremseinrichtung unabhängig von der Drehstellung der Drehanordnung und somit unabhängig von der Anordnung der von der Drehanordnung getragenen Last ihre Bremsfunktion ausüben kann. Eine derartige Maßnahme vereinfacht die Anordnung einer Last, insbesondere eines länglichen Objekts, auf dem erfindungsgemäßen Fahrzeug, da nun nicht mehr, wie bei den bekannten Fahrzeugen, darauf geachtet werden muss, dass die zu transportierenden Last entlang der Längsachse des Fahrzeugs ausgerichtet ist.

Vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine schematische Darstellung eines Fahrzeug-Verbunds zum Transportieren eines länglichen Objekts, insbesondere einer selbsttragenden Last,
- Figur 2: ein Ausführungsbeispiel eines nachlaufenden Fahrzeugs des Fahrzeug-Verbunds zusammen mit dem in einem Klemmadapter einer Lastauflage gehaltenen länglichen Objekt,
- Figur 3: das Ausführungsbeispiel der Figur 2 ohne die Lastauflage und das längliche Objekt,
- Figur 4: eine Draufsicht auf das Ausführungsbeispiel der Figur 2 ohne Lastauflage in einer ersten Neutralposition einer Drehanordnung,
- Figur 5: eine Draufsicht auf das Ausführungsbeispiel der Figur 3 ohne Lastauflage in einer zweiten Neutralposition der Drehanordnung,
- Figur 6: ein Detail VI der Figur 4, und
- Figur 7: ein Detail VII der Figur 5.

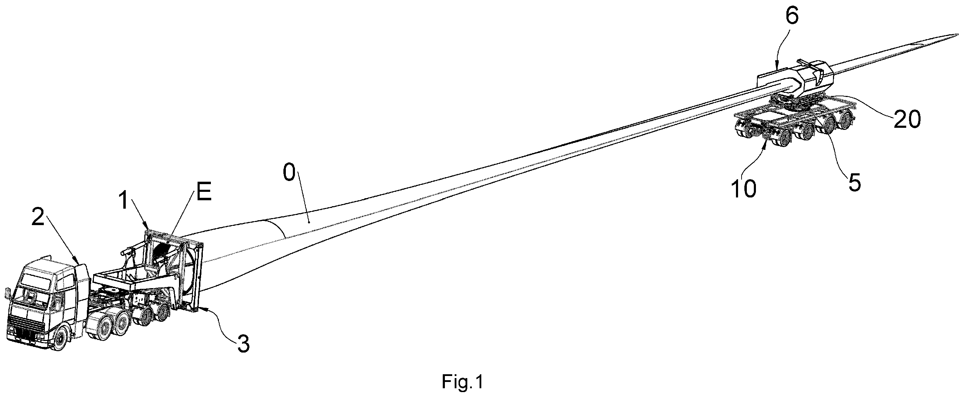

In Figur 1 ist ein allgemein mit 1 bezeichneter Fahrzeug-Verbund dargestellt, wie er weitverbreitet zum Transport eines länglichen Objekts O, insbesondere einer selbsttragenden Last wie eines Mastabschnitts oder eines Rotorblatts einer Windturbine verwendet wird. Der Fahrzeug-Verbund 1 weist ein an und für sich bekanntes und daher nicht mehr näher beschriebenes Zugfahrzeug 2 auf, an dem eine allgemein mit 3 bezeichnete Vorrichtung zum Halten eines ersten Endes E des länglichen Objekts O befestigbar ist. Der Fahrzeug-Verbund 1 besitzt des Weiteren ein nachlaufendes Fahrzeug 10, auf dem eine auf einer Drehanordnung 20 gelagerte Lastauflage 5 vorgesehen ist, auf der ein zweites Ende oder ein hinterer Endbereich des zu transportierenden länglichen Objekts O aufliegt oder daran befestigt ist.

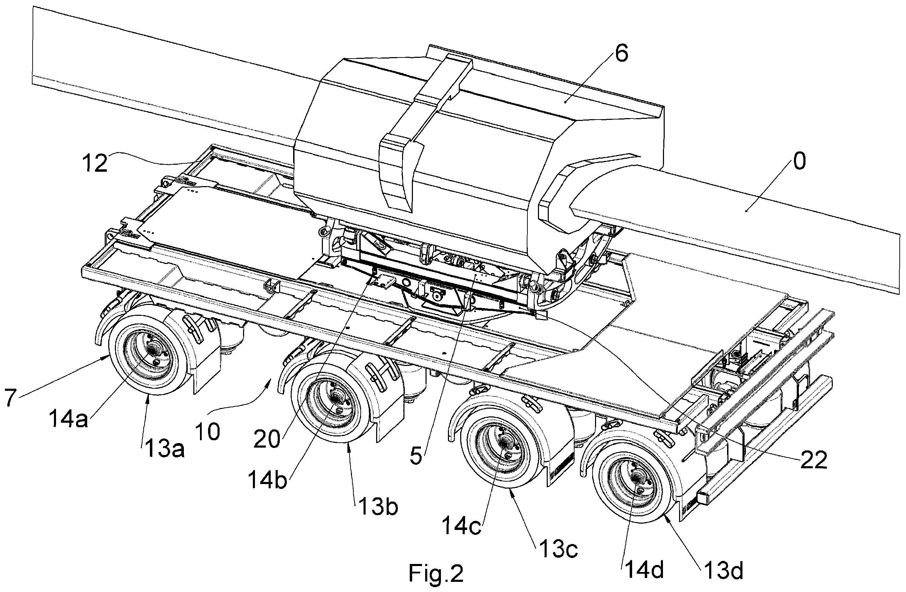

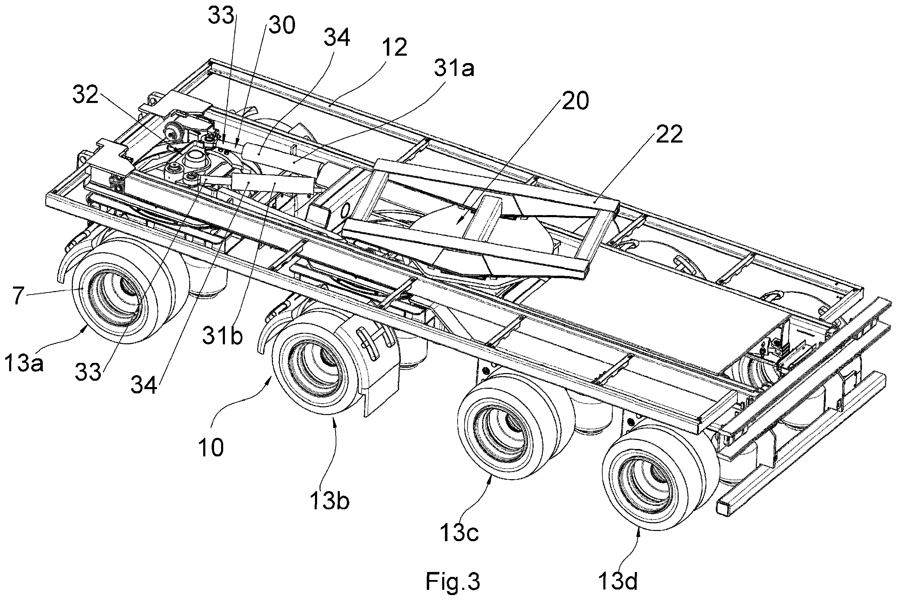

Wie aus der Figur 1 ersichtlich, wird eine mechanische Verbindung zwischen dem Zugfahrzeug 2 und dem nachlaufenden Fahrzeug 10 nur durch das längliche Objekt O ausgebildet. Ändert sich nun die Fahrtrichtung des Zugfahrzeugs 2, so ist es in der Regel erforderlich, dass das nachlaufende Fahrzeug 10 ebenfalls seine Fahrtrichtung ändert. Eine Änderung der Fahrtrichtung des Zugfahrzeugs 2 bewirkt, dass sich der Winkel zwischen der Längsachse des nachlaufenden Fahrzeugs 10 und der Längsachse des länglichen Objekts O ändert. Wie am besten aus den Figuren 2 und 3 ersichtlich ist, ist das längliche Objekt O mittels eines Klemmadapters 6 auf der Lastauflage 5 und diese auf der Drehanordnung 20 des Fahrzeugs 10 gelagert, so dass eine Änderung des Winkels zwischen der Längsachse des nachlaufenden Fahrzeugs 10 und dem länglichen Objekt O zu einer Auslenkung der Drehanordnung 20 aus ihrer Neutralstellung, in welcher sie sich bei einem geradeaus laufenden Fahrzeug befindet, führt. Dieser Drehwinkel wird erfasst und zur Steuerung einer entsprechenden Lenkbewegung des Fahrzeugs 10 herangezogen. Ein derartiger Fahrzeug-Verbund 1 sowie die Fahrzeuge 2 und 10 sind bekannt und müssen daher nicht mehr näher im Detail beschrieben werden.

In den Figuren 2 und 3 ist ein Ausführungsbeispiel des nachlaufenden Fahrzeugs 10 des Fahrzeug-Verbunds 1 dargestellt, welches ein Chassis 12 aufweist, an dessen Unterseite eine Anzahl von Fahrgestellen 13a-13d mit Achsen 14a-14d angeordnet sind. Das Fahrzeug 10 weist im hier beschriebenen Fall zwei lenkbaren Achsen 14a und 14b auf, wobei aber die Zahl der lenkbaren Achsen - insbesondere in Abhängigkeit von der Länge des Fahrzeugs 10 - in weiten Grenzen variiert werden kann. Es ist ausreichend, dass das Fahrzeug 10 mindestens eine lenkbare Achse, z. B. die lenkbare Achse 14a, besitzt. Ist mehr als eine lenkbare Achse vorhanden, so wird bevorzugt, dass die lenkbare Achse 14a und die weiteren lenkbaren Achsen durch in Längsrichtung des Fahrzeugs 10 verlaufende Lenkstangen miteinander verbunden sind, so dass eine Lenkbewegung der lenkbaren Achse 14a auf die mindestens eine weitere lenkbare Achse 14b übertragen wird. Eine derartige Konstruktion ist bekannt und muss daher ebenfalls nicht mehr näher beschrieben werden.

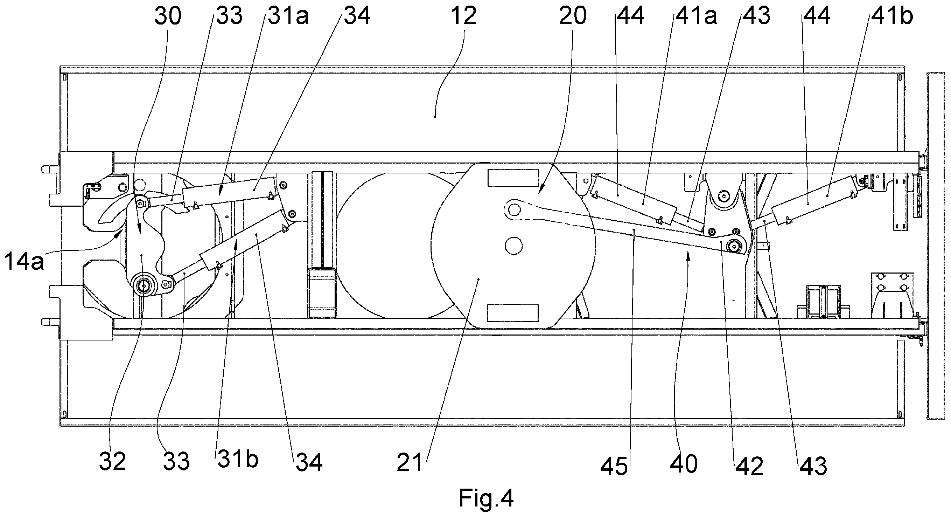

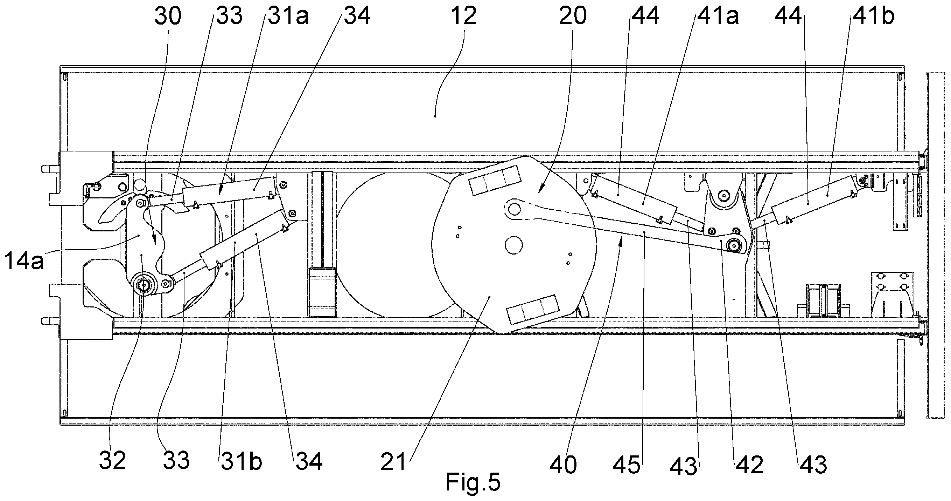

Auf dem Chassis 12 ist die Drehanordnung 20 um eine Hochachse rotierbar angeordnet, auf der die an für sich bekannte und daher nicht näher beschriebene Lastauflage 5 angeordnet ist. Das zu transportierendes Objekt O ist an der Lastauflage 5 mittels eines Klemmadapters 6 befestigt. Die Figur 2 zeigt das Fahrzeug 10 zusammen mit dem in Figur 1 dargestellten länglichen Objekt O und der Lastauflage 5 sowie dem Klemmadapter 6. Das längliche Objekt O ist entlang der Längsachse des Fahrzeugs 10 ausgerichtet, die Räder 7 der Achsen 14a-14d sind nicht eingeschlagen, das Lastbett 5 ist ebenfalls in Längsrichtung des Fahrzeugs 10 ausgerichtet, die die Lastauflage 5 tragende Drehanordnung 20 befindet sich in ihrer in Figur 4 gezeigten ersten Neutralposition. Die Figur 3 zeigt nun das Fahrzeug 10 der Figuren 1 und 2, aber ohne das längliche Objekt O sowie den Klemmadapter 6. In dieser Figur ist nur ein auf einer Drehplatte 21 der Drehanordnung 20 angeordneter Unterbau 22 der Lastauflage 5 dargestellt. Die Drehanordnung 20 der Figur 3 befindet sich in ihrer in Figur 5 dargestellten zweiten Neutralposition, welche gegenüber der in Figur 4 dargestellten ersten Neutralposition um einen gewissen Drehwinkel ausgelenkt ist. Die Räder 7 der Achsen 14a-14d befinden sich aber weiter in ihrer Geradeaus-Stellung, es ist also auch hier kein Lenkeinschlag der Räder 7 vorhanden.

Das Fahrzeug 10 weist eine Lenkeinrichtung 30 (siehe Figur 4 sowie Figuren 5 und 6) auf, durch welche die Achse 14a des Fahrzeugs 10 lenkbar ist. Im beschriebenen Ausführungsbeispiel besitzt die Lenkeinrichtung 30 zwei Lenkzylinder 31a und 31b. Diese greifen an einem Lenkgestell 32, welches mit der lenkbaren Achse 14a verbunden ist, sodass durch ein Einfahren eines der beiden Lenkzylinder 31a bzw. 31b bei gleichzeitigem Ausfahren des anderen Lenkzylinders 31b bzw. 31a eine Drehbewegung des Lenkgestells 32 und somit der Räder 7 der lenkbaren Achse 14a durchführbar ist. Hierzu ist vorgesehen, dass jeweils eine Kolbenstange 33 eines jeden der beiden Lenkzylinder 31a, 31b am Lenkgestell 32 angreift und ein Zylindergehäuse 34 eines jeden der beiden Lenkzylinder 31a, 31b am Chassis 12 befestigt ist.

Um nun eine Auslenkung der Drehanordnung 20 um einen bestimmten Drehwinkel in eine entsprechende Lenkbewegung der lenkbaren Achse 13a umzusetzen, ist eine Steuereinrichtung 40 vorgesehen, welche eine Drehbewegung der Drehplatte 21 der Drehanordnung 20 erfasst und eine entsprechende Ansteuerung der Lenkeinrichtung 30 bewirkt. Hierzu ist vorgesehen, dass die Steuereinrichtung 40 zwei Steuerzylinder 41a, 41b aufweist, deren Kolbenstangen 43 jeweils an einem drehbar im Chassis 12 angeordneten Steuerelement 42 angreifen, welches seinerseits über eine Steuerstange 45 mit der Drehanordnung 20 verbunden ist. Der erste Steuerzylinder 41a ist über einen in den Figuren nicht gezeigten Hydraulickreis mit dem ersten Lenkzylinder 31a und der zweite Steuerzylinder 42b ist über einen weiteren Hydraulikkreis mit dem zweiten Lenkzylinder 31b verbunden. Bewegt sich die Drehplatte 21 der Drehanordnung 20 in der Darstellung der Figuren 4 und 5 entgegen dem Uhrzeigersinn, so wird durch die mit der Drehplatte 21 der Drehanordnung 20 verbundene Steuerstange 45 das Steuerelement 42 in der Darstellung dieser Figuren nach links gezogen. Dies bewirkt, dass die Kolbenstange 43 des ersten Steuerzylinders 41a eingefahren wird. Das dadurch aus dem Kolbenraum des Steuerzylinders 41a verdrängte Medium wird über den ersten Hydraulikkreis zum ersten Lenkzylinder 31a geleitet, was bewirkt, dass dessen Kolbenstange 33 ausfährt und somit das Lenkgestell 32 in einer entgegen dem Uhrzeigersinn verlaufenden Richtung bewegt. Gleichzeitig bewirkt das Ausfahren der Kolbenstange 33 des Lenkzylinders 31a, dass das Hydraulikmedium auf einer Ringflächenseite des Lenkzylinders 31a in eine Ringflächenseite des Steuerzylinders 41a verdrängt wird. Der Steuerzylinder 41b und der Lenkzylinder 31b verhalten sich korrelierend entgegengesetzt. Bei dem beschriebenen Ausführungsbeispiel des Fahrzeugs 10 ist somit vorgesehen, dass eine Zweikreislenkung ausgebildet ist, wobei der Steuerzylinder 41a und der Lenkzylinder 31a einen ersten Lenkkreis und der Steuerzylinder 41b und der Lenkzylinder 31b einen zweiten Lenkkreis ausbilden. Die beiden Steuerzylinder 41a, 41b fungieren hierbei als Geberzylinder und die Lenkzylinder 31a, 31b als Nehmerzylinder. Eine derartige Ausgestaltung besitzt den Vorteil, dass das Fahrzeug 10 auch dann noch lenkfähig ist, wenn einer der beiden Lenkkreise, zum Beispiel durch einen Ausfall des Steuerzylinders 41a oder 41b, ausfällt, da dann der andere der beiden Steuerzylinder 41b oder 41a die Lenkfunktion übernehmen kann. Die Ausbildung des beschriebenen Fahrzeugs 10 mit einer derartigen Zweikreislenkung ist zwar vorteilhaft, aber nicht zwingend.

Eine Drehbewegung der Drehanordnung 20 wird somit in eine Bewegung des Lenkgestells 32 und folglich in eine Lenkbewegung der Achse 14a umgesetzt. Dem Fachmann ist aus der vorstehenden Beschreibung ersichtlich, dass der Grad der Kopplung zwischen einer Auslenkung der Drehanordnung 20 und einer Auslenkung des Lenkgestells 32 und somit der lenkbaren Achse 14a des Fahrgestells 13a, insbesondere von der Inkompressibilität des verwendeten Hydraulikmediums abhängt: Da das Hydraulikmedium (annähernd) inkompressibel ist, wird eine weitgehend direkte Kopplung zwischen der Drehanordnung 20 und dem Lenkgestell 32 erreicht, das heißt, eine Auslenkung der Drehanordnung 20 wird "direkt" auf das Lenkgestell 32 übertragen.

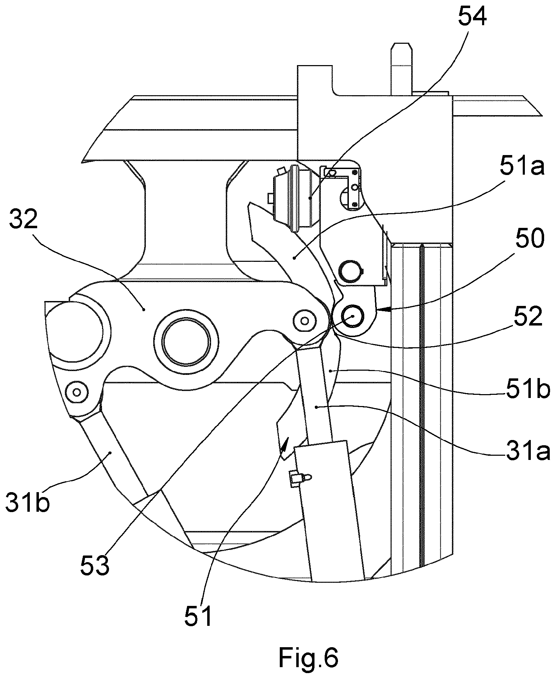

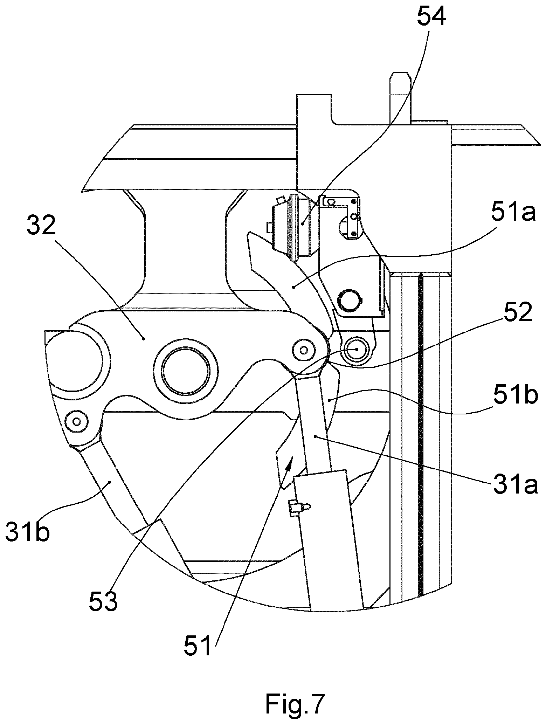

In den Figuren 6 und 7 ist nun in vergrößerter Darstellung einer aus den Figuren 4 und 5 ersichtlichen Bremseinrichtung 50 dargestellt, welche dazu dient, die Bewegung des Lenkgestells 32, der Achse 14a, des Fahrgestells 13a und somit der Drehanordnung 20 zu dämpfen. Man erkennt in den vorgenannten Figuren wiederrum die beiden Lenkzylinder 31a und 31b der Lenkeinrichtung 30 sowie das Lenkgestell 32, welches auf die lenkbare Achse 14a einwirkt. Die Bremseinrichtung 50 weist ein mit dem Lenkgestell 32 verbundenes Kurvensegment 51 auf, welches zwei Segmenthälften 51a und 51b besitzt, wo bereits zwischen diesen beiden Segmenthälften 51a und 51b eine Bremsmulde 52 angeordnet ist. Die Bremseinrichtung 50 besitzt ein Bremselement 53, welches von einem Bremszylinder 54 beaufschlagt ist, sodass durch die Wirkung des Bremszylinders 54 das Bremselement 53 in die Bremsmulde 52 gedrückt werden kann. Die Figur 6 zeigt die Bremseinrichtung 50 in ihrer Brems- Konfiguration, in welcher das Bremselement 52 durch den Bremszylinder 54 beaufschlagt in die Bremsmulde 52 eingreift. Die Figur 7 zeigt die Bremseinrichtung 50 in ihrer Neutralposition, in welcher kein Wirkeingriff zwischen dem Bremselement 53 und der Bremsmulde 52 und folglich keine Bremswirkung gegeben ist. Die Beaufschlagung der Bremsmulde 52 durch das Bremselement 53 bewirkt, dass für eine Auslenkung des Lenkgestells 32 aus seiner in den Figuren 4 bzw. 5 gezeigten ersten bzw. zweiten Neutralposition die vom Bremszylinder 54 über das Bremselement 53 auf das Kurvensegment 51 aufgebrachte Bremskraft überwunden werden muss, damit eine Bewegung des Lenkgestells 32 entgegen der Wirkung der Bremskraft möglich ist: Bei einer Drehbewegung des Lenkgestells 32 und somit des mit ihm verbundenen Kurvensegments 51 muss das in die Bremsmulde 52 eingreifende Bremselement 53 entgegen der vom Bremszylinder 54 ausgeübte Bremskraft zurückbewegt werden, wodurch eine Bremswirkung, insbesondere im Sinne einer Dämpfung der Auslenkung des Lenkgestells 32 und somit der mit ihm wie vorstehend beschrieben über die Hydraulikkreisläufe gekoppelten Drehanordnung 20 erreicht wird.

Dem Fachmann ist aus vorstehender Beschreibung ersichtlich, dass der wesentliche Unterschied zwischen der hier beschriebenen Konstruktion und der eingangs erläuterten Ausbildung der bekannte Fahrzeug darin zu sehen ist, dass die Bremseinrichtung 50 nicht - wie dies bei den bekannten Fahrzeugen der Fall ist - auf der Drehplatte 21 der Drehanordnung 20 angebracht ist und unmittelbar auf die Drehanordnung 20 einwirkt, sondern auf das Lenkgestell 32 der lenkbaren Achse 14a.

Obwohl - wie vorstehend beschrieben - kein direkter Wirkkontakt zwischen der Bremseinrichtung 50 und der Drehanordnung 20 gegeben ist, dient aber die Bremseinrichtung 50 dazu, die Drehbewegung der Drehanordnung 20 zu beeinflussen. Dies wird durch die Kopplung zusammenwirkender Lenk- und Steuerzylinder 31a, 41a und 31b, 41b erreicht: Wie vorstehend beschrieben, ist der Lenkzylinder 31a über den ersten Hydraulikkreismit dem Steuerzylinder 41a und der Lenkzylinder 31b mit dem Steuerzylinder 41b über den weiteren Hydraulikkreis verbunden. Diese hydraulisch bewirkte Kopplung zusammenwirkender Zylinder 31a, 41a und 31b, 41b bewirkt nun, dass eine durch die Bremseinrichtung 50 bewirkte "Bremsung" des Lenkgestells 32 in einer Dämpfung der Drehbewegung der Drehanordnung 20 resultiert, wodurch eine Bremse für die Drehanordnung 20 ausgebildet ist. Die Bremseinrichtung 50 bewirkt also in vorteilhafter Art und Weise nicht nur, dass unerwünschte Einwirkungen von äußeren Einflüssen, wie zum Beispiel Bodenunebenheiten, auf die lenkbare Achse 14a des Fahrgestells 13a und gegebenenfalls mit diesem Fahrgestell 13a verbundener weiterer lenkbarer Fahrgestelle 13b durch die Bremseinrichtung 50 zumindest reduziert werden. Die oben beschriebene Kopplung zwischen der Bremseinrichtung 50 und der Drehanordnung 20 bewirkt auch eine Stabilisierung des Fahrzeugs 10, da durch die beschriebenen Maßnahmen die Bewegung zwischen dem Fahrzeug 10 und der Ladung, welche auf der Drehanordnung 20 angeordnet ist, ebenfalls gedämpft ist.

Die beschriebene Ausgestaltung besitzt den weiteren Vorteil, dass hierdurch in einfacher Art und Weise eine Bremseinrichtung 50 ausgebildet ist, bei der es nun nicht mehr - wie bei den bekannten Fahrzeugen - erforderlich ist, dass die auf der Drehanordnung 20 angeordnete Lastauflage 5 in einer definierten Stellung, nämlich in der ersten Neutralposition, angeordnet werden muss, um die Drehanordnung 20 bremsen zu können: Wie bereits eingangs beschrieben, war es bei den bekannten Fahrzeugen erforderlich, dass die Drehanordnung 20 und somit das an ihr befestigte Kurvensegment derart positioniert waren, dass das Bremselement der Bremseinrichtung in die Bremsmulde des Kurvensegments eingreifen konnte, was bei den bekannten Fahrzeugen nur in einer einzigen Stellung möglich war. Indem nun vorgesehen ist, dass das Kurvensegment 51 samt Bremsmulde 52 der Bremseinrichtung 50 nicht mehr an der Drehanordnung 20 angeordnet ist, sondern getrennt von der Drehanordnung 20 an dem Lenkgestell 32 der lenkbaren Achse 14a angeordnet ist, und dieses Lenkgestell 32 und der Drehanordnung 20 wie vorstehend beschrieben über die zusammenwirkenden Zylindern 31a, 41a und 31b, 41b miteinander in Wirkverbindung stehen, ist es möglich, die Drehanordnung 20 in einer Anzahl von unterschiedlichen Positionen zu positionieren und trotzdem eine Bremswirkung der Bremseinrichtung 50 zu erzielen.

In den Figuren 4 und 5 sind unterschiedliche Stellungen der Drehanordnung 20 gezeigt, die Figur 4 zeigt eine Positionierung der Drehanordnung in ihrer ersten Neutralposition, in der - wie aus der Darstellung der Figur 2 ersichtlich ist - das zu transportierende längliche Objekt O in der Längsachse des Fahrzeugs 10 ausgerichtet ist. Die Figur 5 zeigt eine gegenüber der vorgenannten Stellung des Drehanordnung 20 verdrehte Stellung desselben, die Drehanordnung 20 befindet sich in einer zweiten Neutralposition. Wie vorstehend beschrieben, wird bevorzugt, dass das Kurvensegment 51 derart ausgebildet und angeordnet ist, dass bei nicht-eingeschlagenen Rädern 7 der lenkbaren Achse 14a die Bremsmulde 52 gegenüber dem Bremselement 53 liegt, sodass dieses durch den Bremszylinder 54 in die Bremsmulde 52 gedrückt werden kann.

Die beim beschriebenen Fahrzeug vorhandene Hydraulikanordnung erlaubt es nun, die durch die Hydraulikkreise bewirkte Kopplung zwischen der Lenkeinrichtung 30 und der Steuereinrichtung 40 und somit zwischen dem Lenkgestell 32 und der Drehanordnung 20 aufzuheben und nach einer Neuausrichtung zwischen Lenkgestell 32 und Drehanordnung 20 die Kopplung zwischen den beiden vorgenannten Komponenten wieder herzustellen. Um eine Neuausrichtung der Drehanordnung 20 zu dem Lenkgestell 32 zu erreichen, wird wie folgt vorgegangen: Das Lenkgestell 32 befindet sich in seiner Neutral-Position, in welcher die Bremsmulde 52 gegenüber dem Bremselement 53 liegt, sodass - wie vorstehend beschrieben - das Bremselement 53 durch den Bremszylinder 54 in Eingriff mit der Bremsmulde 52 gebracht werden kann. Dann werden die Hydraulikkreise zwischen den Steuerzylindern 41a und 41b und den Lenkzylinder 31a und 31b geöffnet, sodass die Steuerzylinder 41a, 41b unabhängig von den Lenkzylindern 31a, 31b bewegt werden können. Exemplarisch soll dies anhand der Figuren 4 und 5 erläutert werden: Die Figur 4 zeigt die Drehanordnung 20 in einer ersten Neutralposition, in welcher das längliche Objekt O mit der Längsachse des Fahrzeugs 10 ausgerichtet ist. Eine Auslenkung der Drehanordnung 20 bewirkt - wie vorstehend beschreiben - eine Auslenkung des Lenkgestells 32 und somit ein Lenkeinschlag der Räder 7 der lenkbaren Achse 14a. Das am Lenkgestell 32 befestigte Kurvensegment 51 befindet sich in einer Position, in welcher sich die Bremsmulde 52 und das Bremselement 53 gegenüberliegen. Nun soll das Fahrzeug 10 derart adaptiert werden, dass die in Figur 5 gezeigte, gegenüber der ersten Neutralposition der Drehanordnung 20 ausgelenkte zweite Neutralposition als Neutral-Stellung der Drehanordnung 20 eingestellt werden soll. Hierzu werden - wie vorstehend beschrieben - der erste und zweite Hydraulikkreis derart geschaltet, dass die Lenkzylinder 31a und 31b von den Steuerzylindern 41a, 41b getrennt werden. Zusätzlich werden Kolbenflächen und Ringflächen der Steuerzylinder 41a und 41b miteinander verbunden, sodass bei einer Änderung der Stellung der Drehanordnung 20 und der daraus resultierenden Änderung der Stellung des Steuerelements 42 Hydraulikmedium des Steuerzylinders 41a in den Steuerzylinder 41b oder umgekehrt fließen kann. Alternativ können die Hydraulikkreise so geschaltet werden, dass die Drehanordnung 20 von einem Hydraulikaggregat (nicht gezeigt) des Fahrzeugs 10 gedreht werden kann. Das Hydraulikmedium strömt in diesem Fall von einer Quelle, vorzugsweise einem Tank, in die Steuerzylinder 41a und/oder 41b, überschüssiges Hydraulikmedium wird in den Tank zurückgeführt. Die Drehanordnung 20 wird nun so lange entweder manuell oder wie vorstehend beschrieben durch das Hydraulikaggregat gedreht, bis sie sich in der gewünschten Stellung befindet. Anschließend werden die Hydraulikkreise zwischen dem Steuerzylinder 41a und dem Lenkzylinder 31a sowie dem Steuerzylinder 41b und dem Lenkzylinder 31b wieder hergestellt. Eine Drehbewegung der Drehanordnung 20 resultiert somit wieder - wie vorstehend beschrieben - in einer Drehbewegung des Lenkgestells 32 und somit der Achse 14a.

Dem Fachmann ist nach vorstehender Beschreibung ersichtlich, dass die beschriebene Anordnung nicht nur darauf beschränkt ist, eine Ausrichtung der Drehanordnung 20 in zwei unterschiedlichen Neutralpositionen zu ermöglichen. Vielmehr erlauben es die beschriebenen Maßnahmen, die Drehanordnung 20 einer Vielzahl von unterschiedlichen Neutralpositionen auszurichten.

Bei der vorstehenden Beschreibung wurde davon ausgegangen, dass die Lenkeinrichtung 30 und die Steuereinrichtung 40 jeweils zwei Zylinder 31a, 31b und 41a, 41b aufweist. Dies ist nicht zwingend. Es kann für gewisse Anwendungsfälle durchaus ausreichend sein, dass nur ein Lenkzylinder 31a oder 31b und/oder ein Steuerzylinder 41a oder 41b vorgesehen ist.

Vorzugsweise ist bei dem beschriebenen Fahrzeug vorgesehen, dass die Zylinder 31a, 31b bzw. 41a, 41b als doppelt-wirkende Zylinder ausgebildet sind.

## Patentansprüche

1. Fahrzeug, insbesondere ein Schwerlast-Fahrzeug, welches ein Chassis (12) mit mindestens einem lenkbaren Fahrgestell (13a) mit mindestens einer Radachse (14a) aufweist, wobei auf dem Chassis (12) ein Drehanordnung (20) zur Aufnahme eines zu transportierenden länglichen Objekts (O) rotierbar angeordnet ist, durch dessen Drehbewegung die mindestens eine lenkbare Achse (14a) des Fahrzeugs (10) lenkbar ist, wobei das Fahrzeug (10) eine Bremseinrichtung (50) aufweist, durch welche die Drehbewegung der Drehanordnung (20) bremsbar ist, und wobei auf die mindestens eine lenkbare Achse (14a) eine Lenkeinrichtung (30) einwirkt, durch deren Betätigung eine Lenkbewegung des oder der Räder (7) der lenkbaren Achse (14a) durchführbar ist, **dadurch gekennzeichnet, dass** die Bremseinrichtung (50) des Fahrzeugs (10) auf die Lenkeinrichtung (30) des mindestens einen lenkbaren Fahrgestells (13a) einwirkt, und dass die Lenkeinrichtung (30) mit der Drehanordnung (20) über mindestens einen Hydraulikkreis, in dem ein inkompressibles Hydraulikmedium vorhanden ist, direkt gekoppelt ist, so dass durch diese direkte Kopplung zwischen Lenkeinrichtung (30) und Drehanordnung (20) die Einwirkung der Bremseinrichtung (50) auf die Lenkeinrichtung (30) mindestens eines lenkbaren Fahrgestells (13a) der Bewegung der Drehanordnung (20) entgegenwirkt.

2. Fahrzeug nach Anspruch 1, **dadurch gekennzeichnet, dass** die Drehanordnung (20) derart von der Lenkeinrichtung (30) entkoppelbar ist, dass die Drehanordnung (20) in mindestens zwei Neutralpositionen ausrichtbar ist.

3. Fahrzeug nach einem der Ansprüche 1 oder 2, **dadurch gekennzeichnet, dass** die Bremseinrichtung (50) ein Kurvensegment (51) mit einer Bremsmulde (52) sowie ein Bremselement (53), welches durch einen Bremszylinder (54) in die Bremsmulde (52) einbringbar ist, aufweist.

4. Fahrzeug nach einem der vorangehenden Ansprüche, **dadurch gekennzeichnet, dass** die Lenkeinrichtung (30) ein mit der lenkbaren Achse (14a) des lenkbaren Fahrgestells (13a) verbundenes Lenkgestell (32) besitzt, und dass am Lenkgestell (32) mindestens ein Lenkzylinder (31a, 31b) angreift.

5. Fahrzeug nach einem der Ansprüche 3 oder 4, **dadurch gekennzeichnet, dass** das Kurvensegment (51) der Bremseinrichtung (50) auf dem Lenkgestell (32) der Lenkeinrichtung (30) angeordnet oder mit diesem verbunden ist.

6. Fahrzeug nach einem der vorangehenden Ansprüche, **dadurch gekennzeichnet, dass** das Fahrzeug (10) eine Steuereinrichtung (40) aufweist, welche die Drehbewegung der Drehanordnung (20) in eine Lenkbewegung des mindestens einen lenkbaren Fahrgestells (13a) umsetzt.

7. Fahrzeug nach Anspruch 6, **dadurch gekennzeichnet, dass** die Steuereinrichtung (40) einen drehbar am Chassis (12) angeordnetes Steuerelement (42) besitzt, welches über eine Steuerstange (45) mit der Drehanordnung (20) verbunden ist, und dass am Steuerelement (42) mindestens ein Steuerzylinder (41a, 41b) angreift, dessen Kolbenstange (43) durch eine Bewegung des Steuerelements (42) ein- und ausfahrbar ist.

8. Fahrzeug nach einem der vorangehenden Ansprüche, **dadurch gekennzeichnet, dass** mindestens ein Steuerzylinder (41a, 41b) mit mindestens einem Lenkzylinder (31a, 31b) durch einen Hydraulikkreis, in dem ein Hydraulikmedium zwischen den beiden verbundenen Zylindern (31a, 41a; 31b, 41b) fließbar ist, verbunden ist, sodass eine durch eine Bewegung der Drehanordnung (20) bewirkte Auslenkung des oder der Steuerzylinder (41a, 41b) eine korrelierte Auslenkung des oder der Lenkzylinder (31a, 31b) bewirkt.

## Claims

1. Vehicle, in particular a heavy-duty vehicle, which has a chassis (12) with at least one steerable undercarriage (13a) having at least one axis (14a), whereby on the chassis (12) a rotary arrangement (20) for receiving an elongated object (O) to be transported is rotably arranged, by way of its rotary movement the at least one steerable axis (14a) of the vehicle (10) can be steered, wherein the vehicle (10) comprises a braking device (50) by which the rotary movement of the rotary arrangement (20) can be braked, and whereby a steering device (30) acts on the at least one steerable axis (14a), whereby by an actuation of which a steering movement of the wheel or the wheels (7) of the steerable axis (14a) can be carried out, **characterized In that** the braking device (50) of the vehicle (10) acts upon the steering device (30) of the at least one steerable undercarriage (13a), and that the steering device (30) and the rotary arrangement (20) are directly connected via at least one hydraulic circuit in which an Incompressible hydraulic medium is contained, so that by means of said direct coupling between the steering device (30) and the rotary arrangement (20) the action of the braking device (50) on the steering device (30) of at least one steerable undercarriage (13a) counteracts the movement of the rotary arrangement (20).

2. Vehicle according to claim 1, **characterized In that** the rotary arrangement (20) can be decoupled from the steering device (30) in such a way that the rotary arrangement (20) can be aligned in at least two neutral positions.

3. Vehicle according to one of the claims 1 or 2, **characterized In that** the braking device (50) comprises a curve segment (51) having a braking recess (52) and a braking element (53) which can be Introduced in the braking recess (52) by means of a braking cylinder (54).

4. Vehicle according to one of the previous claims, **characterized in that** the steering device (30) comprises a steering frame (32) connected to the steerable axis (14a) of the steerable undercarriage (13a), and that at least one steering cylinder (31a, 31b) engages on the steering frame (32).

5. Vehicle according to one of the claims 3 or 4, **characterized in that** the curve segment (51) of the braking device (50) is arranged on the steering frame (32) of the steering device (30) or is connected to it.

6. Vehicle according to one of the previous claims, **characterized in that** the vehicle (10) comprises a control device (40) for transforming a rotary movement of the rotary arrangement (20) Into a steering movement of the at least one steerable undercarriage (13a).

7. Vehicle according to claim 6, **characterized in that** the control device (40) comprises a steering element (41) being rotably arranged on the chassis (12), which is connected with the rotary arrangement (20) via a steering rod (45), and that at least one control cylinder (41a, 41b) engages the control element (42), the cylinder rod of which can be moved inwardly and outwardly by a movement of the control element (42).

8. Vehicle according to one of the previous claims, **characterized in that** at least one control cylinder (41a, 41b) is connected with at least one steering cylinder (31a, 31b) via a hydraulic circuit, in which a hydraulic medium can flow between two connected cylinders (31a, 41a; 31b, 41b), so that a deflection of the control cylinder (41a, 41b) effected by a movement of the rotary arrangement (20) results in a correlated deflection of the or one of the steering cylinders (31a, 31b).

## Revendications

1. Véhicule, en particulier véhicule à charge lourde, qui présente un châssis (12) avec au moins un train de roulement (13a) orientable avec au moins un essieu de roue (14a), dans lequel sur le châssis (12) un agencement rotatif (20) est agencé de manière rotative pour le logement d'un objet (O) oblong à transporter, par le mouvement rotatif duquel l'au moins un essieu (14a) orientable du véhicule (10) peut être orienté, dans lequel le véhicule (10) présente un dispositif de freinage (50), par lequel le mouvement rotatif de l'agencement rotatif (20) peut être freiné, et dans lequel un dispositif d'orientation (30) agit sur l'au moins un essieu (14a) orientable, par l'actionnement duquel un mouvement d'orientation de la ou des roues (7) de l'essieu (14a) orientable peut être réalisé, **caractérisé en ce que** le dispositif de freinage (50) du véhicule (10) agit sur le dispositif d'orientation (30) d'au moins un train de roulement (13a) orientable, et que le dispositif d'orientation (30) est directement couplé à l'agencement rotatif (20) par le biais d'au moins un circuit hydraulique, dans lequel un fluide hydraulique incompressible est présent, de sorte que par ce couplage direct entre le dispositif d'orientation (30) et l'agencement rotatif (20) l'action du dispositif de freinage (50) sur le dispositif d'orientation (30) au moins d'un train de roulement (13a) orientable agisse contre le mouvement de l'agencement rotatif (20).

2. Véhicule selon la revendication 1, **caractérisé en ce que** l'agencement rotatif (20) peut être découplé du dispositif d'orientation (30) de telle manière que l'agencement rotatif (20) puisse être aligné dans au moins deux positions neutres.

3. Véhicule selon l'une quelconque des revendications 1 ou 2, **caractérisé en ce que** le dispositif de freinage (50) présente un segment de came (51) avec une cavité de freinage (52) ainsi qu'un élément de freinage (53) qui peut être introduit par un cylindre de freinage (54) dans la cavité de freinage (52).

4. Véhicule selon l'une quelconque des revendications précédentes, **caractérisé en ce que** le dispositif d'orientation (30) possède un bissel (32) relié à l'essieu (14a) orientable du train de roulement (13a) orientable, et qu'au moins un cylindre d'orientation (31a, 31b) agit sur le bissel (32).

5. Véhicule selon l'une quelconque des revendications 3 ou 4, **caractérisé en ce que** le segment de came (51) du dispositif de freinage (50) est agencé sur le bissel (32) du dispositif d'orientation (30) ou est relié à celui-ci.

6. Véhicule selon l'une quelconque des revendications précédentes, **caractérisé en ce que** le véhicule (10) présente un dispositif de commande (40) qui convertit le mouvement rotatif de l'agencement rotatif (20) en un mouvement d'orientation d'au moins un train de roulement (13a) orientable.

7. Véhicule selon la revendication 6, **caractérisé en ce que** le dispositif de commande (40) possède un élément de commande (42) agencé de manière rotative sur le châssis (12) qui est relié par le biais d'une tige de commande (45) à l'agencement rotatif (20), et qu'au moins un cylindre de commande (41a, 41b) agit sur l'élément de commande (42), dont la tige de piston (43) peut être entrée et sortie par un mouvement de l'élément de commande (42).

8. Véhicule selon l'une quelconque des revendications précédentes, **caractérisé en ce qu'**au moins un cylindre de commande (41a, 41b) est relié à au moins un cylindre d'orientation (31a, 31b) par un circuit hydraulique, dans lequel un fluide hydraulique peut s'écouler entre les deux cylindres (31a, 41a ; 31b, 41b) reliés de sorte qu'une déviation provoquée par un mouvement de l'agencement rotatif (20) du ou des cylindres de commande (41a, 41b) provoque une déviation corrélée du ou des cylindres d'orientation (31a, 31b).
